**Europäisches Patentamt**

**European Patent Office**

**Office européen des brevets**

(11) Veröffentlichungsnummer : **0 077 918**
**B1**

(12) # EUROPÄISCHE PATENTSCHRIFT

(45) Veröffentlichungstag der Patentschrift :
**18.06.86**

(51) Int. Cl.⁴ : **F 16 L 49/00, F 16 L 21/02,
F 16 L 9/08, F 16 J 15/14**

(21) Anmeldenummer : **82108655.0**

(22) Anmeldetag : **18.09.82**

(54) **Steckmuffendichtung für Betonrohre.**

(30) Priorität : **28.10.81 DE 3142724
25.05.82 DE 3219522**

(43) Veröffentlichungstag der Anmeldung :
**04.05.83 Patentblatt 83/18**

(45) Bekanntmachung des Hinweises auf die Patenterteilung : **18.06.86 Patentblatt 86/25**

(84) Benannte Vertragsstaaten :
**AT BE CH DE FR GB IT LI LU NL SE**

(56) Entgegenhaltungen :
**DE-A- 2 531 318
GB-A- 622 058
GB-A- 1 409 071
US-A- 3 493 236**

(73) Patentinhaber : **Denso-Chemie Wedekind KG
Felderstrasse 24
D-5090 Leverkusen (DE)**

(72) Erfinder : **Faerber, Peter, Dr. habil. Dr.
Atzlenbach 6b
D-5090 Leverkusen 31 (DE)**
Erfinder : **Weingarten, Hans-Theo
Auf der Griesse 75
D-5090 Leverkusen 1 (DE)**
Erfinder : **Rösgen, Rudolf
Warthestrasse 21
D-5090 Leverkusen 1 (DE)**
Erfinder : **Wedekind, Benno, Dr.
Karl-Huschens-Strasse 21
D-5653 Leichlingen 1 (DE)**

(74) Vertreter : **Langmaack, Jürgen, Dipl.-Ing. et al
Patentanwälte Maxton . Maxton . Langmaack Goltsteinstrasse 93 Postfach 51 08 06
D-5000 Köln 51 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Steckmuffendichtung für Betonrohre, bestehend aus einem an der Glocke befestigten Dichtungsring aus elastomerem Material mit einem über ein Halteteil einbetonierten bandförmigen Befestigungsteil, der mit einem — im Querschnitt — entsprechend der vorgesehenen Verpressung zwischen der Innenwandung der Glocke und der Außenwandung des eingesteckten Rohrendes sich verdickenden Dichtungsteil verbunden ist, wobei der Dichtungsteil aus seiner Lage zum Zeitpunkt der Herstellung und gegebenenfalls beim nachfolgenden Transport und der Lagerung des Rohres (Einbauzustand) durch Umlegung in Richtung auf den Glockenspiegel in Betriebsstellung gebracht wird, wobei ferner die in Betriebsstellung an der Innenwandung der Glocke anliegende Oberfläche des Dichtungsteils im Einbauzustand in etwa mit der Innenwandung der Glocke fluchtend angeordnet ist.

Der Begriff « Einbauzustand » bezeichnet die Lage des Dichtungsteiles in bezug auf die Glocke bei der Herstellung und ggf. beim nachfolgenden Transport und der nachfolgenden Lagerung. Der Begriff « Betriebsstellung » bezeichnet die Lage, die der Dichtungsteil einnimmt, wenn bei der Verlegung der Rohre das Spitzende eines Nachbarrohres in die Glocke eingeschoben ist. Der Begriff « Betonrohre » umfaßt Betonrohre mit und ohne Armierung, sowie Formstücke aus Beton mit Muffe, beispielsweise Abzweigungen, Krümmer, Anschlußstücke, Schachtringe und dgl... Aus der DE-A-22 52 089 ist eine Dichtungsanordnung für Betonrohre der eingangs genannten Art bekannt. Die vorbekannte Dichtungsanordnung ist nach Art einer Rollringdichtung ausgelegt. Sie unterscheidet sich von der klassischen Rollringdichtung jedoch dadurch, daß sie über einen Haltekragen in der Glocke des Betonrohres einbetoniert ist. Damit beim Einschieben des Spitzendes in die Glocke der Dichtungsring aus seiner Lage im Einbauzustand in die Dichtstellung bzw. in die vorstehend bezeichnete « Betriebsstellung » umgelegt werden kann, ist es erforderlich, daß der Dichtungsring mit seinem Querschnitt die Fläche der Innenwandung der Glocke wenigstens teilweise überragt. Nur so kann beim Einschieben des Spitzendes in die Glocke der Abrollvorgang überhaupt stattfinden. Unter fertigungstechnischen Gesichtspunkten weist diese Dichtungsanordnung den Nachteil auf, daß für die Herstellung nicht nur besonders geformte Untermuffen angeschafft werden müssen, also die bisher üblichen Untermuffenformen nicht mehr verwendet werden können, sondern darüber hinaus wegen der Hinterschneidung zur Herstellung des erforderlichen Abrollbereichs in der Glocke ein zusätzlicher, lösbarer Formring eingesetzt werden muß. Hierdurch wird das Herstellungsverfahren erschwert und verteuert. Ein gewisser Nachteil der vorbekannten Dichtung liegt außerdem darin, daß wegen des Abrollens des Dichtungsteiles beim Einschieben des Spitzendes in dessen Endposition der Dichtungsteil nahezu am hinteren Ende der Glocke zu liegen kommt, so daß das eingeschobene Spitzende nach dem Verlegen praktisch immer knirsch gegen den Glockenspiegel gedrückt werden muß, um sicher zu sein, daß der Dichtungsring auch ordnungsgemäß positioniert ist. Ein weiterer Nachteil der vorbekannten Dichtung besteht darin, daß beim Einschieben des Spitzendes der Dichtungsring über die Stelle gerollt wird, die durch den einbetonierten Halteteil in ihrem Querschnitt geschwächt ist. Da beim Abrollvorgang praktisch bereits die volle Verpressung des Dichtungsringes wirksam ist, besteht die Gefahr, daß die Glocke an dieser Stelle gesprengt wird.

Aus der US-A-38 66 925 (Fig. 6, 12, 14) sind ferner über ein Halteteil an der Glocke eines Rohres befestigte Dichtungsanordnungen bekannt, deren Dichtelement durch eine ringförmige Lippe gebildet wird, die beim Einschieben des Spitzendes auf dieses aufgleitet. Die Dichtkraft wird durch ein in das elastische Material der Dichtlippe eingebettetes Federelement erzeugt. Der Nachteil dieser vorbekannten Ausführung besteht zum einen darin, daß die Dichtkraft durch das Federelement vorgegeben ist und dementsprechend gegenüber Dichtungsanordnungen, bei denen die Dichtkraft durch Verpressung eines Dichtungsteils aufgebracht wird, reduziert ist. Da das Dichtungsteil lippenartig ausgebildet ist, ergibt sich ferner hier eine linienartige Berührung mit der Gegenfläche des abzudichtenden Spaltes, so daß auch hier in Verbindung mit den reduzierten Dichtkräften, beispielsweise bei rauhen Betonoberflächen, die Gefahr von Undichtigkeiten in der Steckmuffendichtung nicht ausgeschlossen werden kann.

Die Ausführungsform gemäß Fig. 6 der US-A-38 66 925 hat den Nachteil, daß beim Einschieben des Spitzendes die freie Kante des Dichtungselementes bis in den Bereich der Scherlastsicherung gezogen werden kann und hierbei entweder die Dichtung insbesondere im Kantenbereich beschädigt wird oder aber das Einschieben bis über die Scherlastsicherung überhaupt verhindert wird, so daß die Dichtung alle Querkräfte einschließlich der Verkehrslasten aufzunehmen hätte.

Bei der Ausführungsform gemäß Fig. 12 der US-A-38 66 925 ist eine einwandfreie Positionierung des Dichtelementes auf einer glatten Untermuffe nicht möglich, so daß zum einen Hilfsanschläge beim Aufziehen auf die Untermuffe verwendet werden müssen, die vor dem Betonieren entfernt werden und zum anderen beim Einfüllen des Betons die Gefahr besteht, daß sich das Dichtelement verschiebt. Bei der Ausführungsform gemäß Fig. 14 muß wegen der Hinterschneidung zwischen Dichtung und Glockenspiegel wiederum zusätzlich ein lösbarer Formring vor

dem Betoniervorgang auf die Untermuffe aufgezogen werden.

Aus der GB-A-622 058 ist eine Dichtung für Betonrohre bekannt, die einen schlauchförmigen, auf eine Untermuffe aufziehbaren Dichtungsteil aufweist, der auf seiner der Glockenöffnung abgewandten Seite mit einem umlaufenden, in den Beton einzuformenden Befestigungsfuß versehen ist. Das der Glockenöffnung zugekehrte Ende des schlauchförmigen Dichtungsteils hebt aufgrund der durch das Aufziehen auf die Untermuffe vorgegebenen Vorspannung nach dem Ziehen der Untermuffe ab und ragt in den Glockeninnenraum hinein. Dieser vorspringende Teil wird beim Einschieben des Spitzendes umgelegt und zwischen Spitzende und Glockenöffnung als Lippendichtung wirksam. Da zwischen Dichtungsteil und Befestigungsteil die Anordnung eines Halteteils fehlt, besteht darüber hinaus die Gefahr, daß das Befestigungsteil aus der Einbettung in den Beton herausgewürgt wird, wenn der zulässige Spaltabstand zwischen Glocke und Spitzende zu klein ist und der Dichtungsteil verpreßt wird.

Der Erfindung liegt die Aufgabe zugrunde, eine Steckmuffendichtung der eingangs bezeichneten Art zu schaffen, die es ohne Änderung der vorhandenen Formwerkzeuge und ohne zusätzliche auf die Untermuffe aufzubringende Formstücke gestattet, bei der Herstellung die Dichtung mit dem Rohrkörper in der Glocke zu verbinden.

Die Aufgabe wird erfindungsgemäß für eine Steckmuffendichtung der eingangs bezeichneten Art dadurch gelöst, daß im Einbauzustand der Dichtungsteil mit seiner in Betriebsstellung der Innenwandung der Glocke zugekehrten Fläche die freie Innenkante der Glockenöffnung bildet und hierbei mit seiner in der Betriebsstellung der Innenwandung der Glocke abgekehrten Fläche am Halteteil und/oder am Beton anliegt und daß der Befestigungsteil und der Halteteil einen in etwa T-förmigen Querschnitt bilden.

Ein derartiger Dichtungsring wird auf die bisher übliche Untermuffe vollständig aufgeschoben, die nach dem Abbinden des in die Form eingefüllten Betons glatt herausgezogen werden kann. Beim Verlegen wird der Dichtungsteil entweder vor dem Einschieben des Spitzendes von Hand oder durch das in die Glocke eindringende Spitzende selbst in Richtung auf den Glockenspiegel umgelegt. Hierbei überragt der Dichtungsteil die Innenwandung der Glocke, so daß beim Einschieben des Spitzendes die Abdichtung der Muffenverbindung durch entsprechendes Verpressen des Dichtungsteils in radialer Richtung bewirkt wird. Ein weiterer Vorteil der erfindungsgemäßen Dichtungskonstruktion besteht darin, daß der Dichtungsteil beim Umlegen so ausgerichtet ist, daß in bezug auf die Einschubrichtung des Spitzendes das in die Glockenwandung einbetonierte Halteteil vor dem Dichtungsteil liegt, so daß zu keinem Zeitpunkt der durch das Halteteil geschwächte Glockenquerschnitt durch Preßkräfte belastet ist. Dadurch, daß der Befestigungsteil und der Halteteil einen in etwa T-förmigen Querschnitt bilden, der seinerseits mit dem Dichtungsteil verbunden ist, so daß Dichtungsteil, Halteteil und Befestigungsteil unter Vorspannung auf der Untermuffe gehalten sind, ergibt sich eine einwandfreie und stabile Ausrichtung des Befestigungsteils, so daß dieser beim Sinfüllen des Betons in die Form einwandfrei eingeformt und nach dem Abbinden des Betons fest in der Glockenwandung verankert ist. Der Dichtungsring kann weder beim Umlegen von Hand noch beim Einschieben des Spitzendes durch die dann auftretenden Kräfte aus seiner Verankerung herausgezogen werden. Dies gilt auch für die Lagerung auf der Baustelle, wo sichergestellt sein muß, daß beispielsweise spielende Kinder die Dichtung nicht aus der Glocke herausreißen können.

In einer bevorzugten Ausgestaltung der Erfindung ist vorgesehen, daß im Einbauzustand der bandförmige Befestigungsteil und der Dichtungsteil flächig aneinanderliegen und daß der Halteteil auf der dem Dichtungsteil abgekehrten Seite am Befestigungsteil angeordnet ist. Dies hat den Vorteil, daß der Halteteil in ausreichendem Abstand sowohl von der Stirnfläche der Glocke als auch von der Innenwandung der Glocke verankert ist, so daß ein Ausbrechen der durch das Halteteil in die Glocke eingeformten Nut vermieden ist.

In einer bevorzugten Ausgestaltung der Erfindung ist ferner vorgesehen, daß der bandförmige Befestigungsteil und der Dichtungsteil auf ihren im Einbauzustand einander zugekehrten Flächen gleichflächig ausgebildet sind.

Besonders zweckmäßig ist es hierbei, wenn in einer weiteren Ausgestaltung der Erfindung der bandförmige Befestigungsteil — bezogen auf einen Längsschnitt durch die Glocke — unter einem spitzen Winkel zur Glockenwandung ausgerichtet ist und der Übergang zwischen Befestigungsteil und Dichtungsteil im Bereich des Schnittpunktes des Befestigungsteiles mit der Glockenwandung liegt.

In weiterer Ausgestaltung der Erfindung ist vorgesehen, daß der Querschnitt des Dichtungsteiles — bezogen auf den Einbauzustand — auf seiner dem Befestigungsteil abgekehrten Seite ausgewölbt, vorzugsweise in etwa dreieckig geformt ist, wobei die Höhe der Auswölbung dem vorgesehenen Wirkungsquerschnitt entspricht. Der Vorteil dieser Formgebung besteht darin, daß nach dem Umlegen des Dichtungsteiles in die Betriebsstellung die nunmehr freigelegte Fläche des Dichtungsteiles einen glatten konischen Verlauf zeigt und somit beim Einschieben des Spitzendes zentrierend wirkt. Außerdem ergeben sich bei dieser Formgebung sehr gute Verformungseigenschaften für den Dichtungsteil, die zu einer einwandfreien Anlage sowohl an der Dichtungsfläche der Glocke als auch an der Dichtungsläche des Spitzendes führen.

In einer Ausgestaltung der Erfindung ist vorgesehen, daß im Einbauzustand Dichtungsteil und Befestigungsteil mit ihren aneinander anliegenden Flächen durch eine lösbare Verbindung verbunden sind. Dies hat schon für die Handhabung des losen Dichtungsringes erhebliche Vorteile, da das verhältnismäßig dünnwandige, bandförmige Befestigungsteil an dem wesentlich formsteiferen Dichtungsteil festgelegt ist und so beim Aufziehen des Elementes auf die Untermuffe unter Vorspannung eine einwandfreie Positionierung auf der Untermuffe gewährleistet ist. Diese Ausgestaltung ist dann besonders vorteilhaft, wenn der Dichtungsring aus abgelängten Teilstücken eines Strangprofiles durch Verbinden der Enden hergestellt wird, da durch Verklebung von Dichtungsteil und Befestigungsteil ein ungewolltes Abklappen des Befestigungsteiles beim Aufziehen auf die Untermuffe vermieden wird. Die lösbare Verbindung kann in einer Ausgestaltung der Erfindung entweder durch einen Heißschmelzkleber, in einer anderen Ausgestaltung der Erfindung durch ein doppelseitiges Klebeband oder in einer weiteren Ausgestaltung der Erfindung durch Formschlußeingriff eines Vorsprungs an einem Teil in eine entsprechende Nut im anderen Teil gebildet werden.

In einer zweckmäßigen Ausgestaltung der Erfindung ist vorgesehen, daß der Halteteil des Befestigungsteiles einen etwa trapezförmigen Querschnitt aufweist und in etwa rechtwinklig zum Befestigungsteil ausgerichtet ist.

In weiterer Ausgestaltung der Erfindung ist vorgesehen, daß der bandförmige Halteteil mit einer sich in Richtung auf den Glockenspiegel erstreckenden, an der Innenwandung der Glocke anlegbaren Deckschürze versehen ist. Durch die Deckschürze wird der von dem Bauteil « Dichtung » überdeckte Bereich der Glockeninnenwandung erheblich vergrößert, so daß in diesem Bereich kein unmittelbarer Kontakt mehr zwischen der Oberfläche der Untermuffe und dem eingefüllten Beton besteht. Durch diese Konstruktion ist es möglich, die Untermuffe auch maschinell und ggf. mit Hilfe von Vibrationseinrichtungen zu ziehen, ohne daß es in dem für die Wirksamkeit der Dichtung kritischen Bereich der Innenwandung der Glocke, nämlich der Anlage für den Dichtungsteil in Betriebsstellung, zu Ausbrüchen an der Innenfläche der Glocke kommt. Hierbei ist zu berücksichtigen, daß bei der industriellen Fertigung von Betonrohren die Untermuffen bereits zu einem Zeitpunkt gezogen werden, zu dem der Beton noch nicht vollständig abgebunden ist. In diesen Fällen kann es trotz der üblichen Behandlung der Untermuffe mit Einschalungsmitteln geschehen, daß am frischen Beton im Bereich der Untermuffe an der Innenfläche gerade im kritischen Bereich teilweise Ausbrüche auftreten können. Durch die erfindungsgemäße Anordnung der Deckschürze wird die Ziehbarkeit der Untermuffe verbessert.

In einer bevorzugten Ausgestaltung der Erfindung ist vorgesehen, daß die Deckschürze den Bereich der Innenwandung der Glocke überdeckt, an dem der Dichtungsteil in Betriebsstellung zur Anlage kommt. Hierdurch ist gewährleistet, daß der Bereich der höchsten Verpressung des Dichtungsteils frei von Kanten oder Stufen ist, die zu Undichtigkeiten führen könnten. Die Deckschürze soll in ihrer Dicke möglichst dünn bemessen werden. Die Untergrenze für die Dicke der Deckschürze wird hierbei durch das Herstellungsverfahren für die Dichtung und/oder das hierzu verwendete Material bestimmt. Bei der Bemessung des Verpressungsquerschnittes des Dichtungsteiles muß allerdings die Dicke der ebenfalls aus elastischem Material bestehenden Deckschürze entsprechend berücksichtigt werden, damit die geforderte Gesamtverpressung der Dichtung eingehalten werden kann.

Da der Dichtungsring vor dem Betonieren zweckmäßigerweise unter Vorspannung auf die Untermuffe aufgebracht wird, ergeben sich eine Reihe von weiteren Vorteilen. Die Vorspannung bewirkt zum einen, daß sich der Dichtungsteil nach dem Ziehen der Untermuffe von seiner durch den Einbauzustand vorgegebenen Anlagefläche an der Glocke abhebt. Bei entsprechender Bemessung der Vorspannung hebt das Dichtungsteil soweit ab, daß es beim Einschieben des Spitzendes des Nachbarrohres von selbst in die Betriebsstellung umgelegt wird.

Ein Umlegen in die Betriebsstellung von Hand ist also bei entsprechend vorgewählter Vorspannung nicht mehr erforderlich.

Nach dem Ziehen der Untermuffe hebt aufgrund der aufgebrachten Vorspannung auch die Deckschürze von der Betonfläche weitgehend ab, so daß die unter der Deckschürze liegende Betonfläche in einfachster Weise einer Sichtprüfung unterzogen werden kann. Etwaige Lunkerstellen in diesem Bereich können somit festgestellt und ausgebessert werden. Diese Sichtprüfung ist deshalb so wichtig, weil gerade dieser Flächenbereich der Glocke die Dichtfläche bildet. Lunkerstellen, Ausbrüche oder dergl. in der Betonfläche in diesem Bereich würden zu einer Verminderung der Verpressung des Dichtungsteiles führen und damit die Gefahr des Auftretens von Undichtigkeiten der Rohrverbindung bewirken.

In einer bevorzugten Ausgestaltung der Erfindung ist vorgesehen, daß der freie Rand der Deckschürze lippenartig ausläuft. Dies hat den Vorteil, daß der Zwischenraum zwischen der Deckschürze und der Untermuffe abgedichtet wird, so daß beim Einfüllen des Betons bei der Herstellung des Rohres in diesen Zwischenraum keine Zementmilch einlaufen kann. Ein weiterer Vorteil dieser Ausgestaltung des freien Randes der Deckschürze besteht darin, daß das vorbeschriebene selbsttätige Abheben der Deckschürze nach dem Ziehen der Untermuffe begünstigt wird.

In Ausgestaltung der Erfindung ist ferner vorgesehen, daß der Dichtungsteil an seinem freien Rand eine Lippe aufweist. Die Anordnung einer Lippe am Dichtungsteil dient ebenfalls dazu, beim Betoniervorgang das Einlaufen von Zementmilch zwischen Dichtung und Untermuffe zu verhindern. Auch hier fördert die Anordnung dieser Lippe das Abheben des Dichtungsteils vom Betonkörper nach dem Ziehen der Untermuffe.

In weiterer Ausgestaltung der Erfindung ist ferner vorgesehen, daß der am bandförmigen Befestigungsteil angeordnete, im Querschnitt vorzugsweise trapezförmige Halteteil eine nach außen ausgewölbte Fußfläche aufweist. Diese Ausgestaltung weist gegenüber einer ebenflächigen Fußfläche des Halteteils den Vorteil auf, daß die Verformbarkeit vermindert ist und dementsprechend ein Herausziehen des einbetonierten Dichtungsringes erschwert wird.

Die Erfindung wird anhand schematischer Zeichnungen von Ausführungsbeispielen näher erläutert. Es zeigen :

Figur 1 in einem Längsschnitt durch eine Glocke eine Dichtung im Einbauzustand und im Montagezustand,

Figur 2, 2a ebenfalls in einem Längsschnitt durch eine Glocke eine bevorzugte Ausführungsform,

Figur 3 ebenfalls in einem Längsschnitt durch eine Glocke eine weitere Ausführungsform,

Figur 4 in einem Längsschnitt durch eine Glocke eines Betonrohres mit eingesetzter Untermuffe eine Dichtung im Einbauzustand,

Figur 5 im Längsschnitt die Anordnung der Dichtung im Montagezustand mit Spitzende eines einzuschiebenden Nachbarrohres,

Figur 6 die Steckmuffenverbindung gemäß Fig. 5 mit eingeschobenem Spitzende.

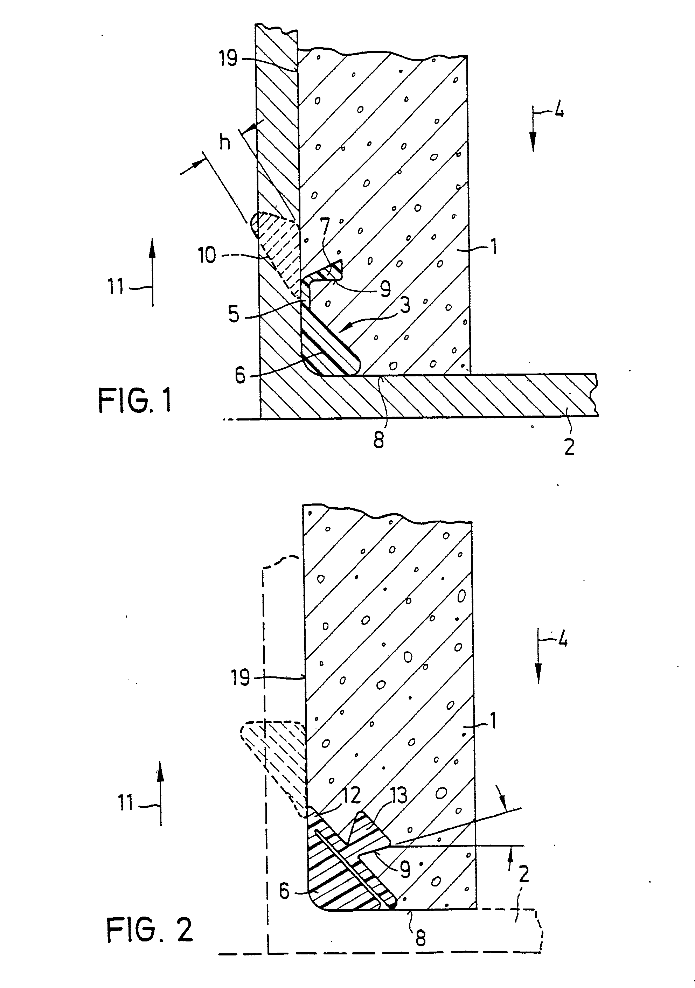

Im dem in Fig. 1 dargestellten Längsschnitt durch eine Glocke 1 eines Betonrohres ist ebenfalls im Längsschnitt die zur Herstellung erforderliche Untermuffe 2 dargestellt. Bei der Herstellung wird der einzubetonierende Dichtungsring 3 unter Vorspannung auf die Untermuffe bis an ihr unteres Ende aufgezogen. Durch die Vorspannung wird verhindert, daß beim Einfüllen des Betons, der in Richtung des Pfeiles 4, d. h. also von oben nach unten in die Form einläuft, der Dichtungsring aufschwimmt.

Der Dichtungsring besteht aus einem bandförmigen Befestigungsteil 5, der in einen im Querschnitt sich verdickenden Dichtungsteil 6 übergeht. Mit dem Befestigungsteil 5 ist ein Halteteil 7 verbunden, der bei dem dargestellten Ausführungsbeispiel einen trapezförmigen Querschnitt aufweist. Der Dichtungsteil 6 weist einen in etwa dreieckförmigen Querschnitt auf, wobei die Höhe h des Dreiecks der gewünschten Dicke des Dichtungsteiles 6 entspricht. Der Halteteil 7 ist in etwa rechtwinklig zum bandförmigen Befestigungsteil 5 ausgerichtet und nach dem Einfüllen des Betons von diesem vollständig umschlossen. Bei der Herstellung des Profils für den Dichtungsring muß aber dafür Sorge getragen werden, daß nach dem Aufziehen des Dichtungsringes unter Vorspannung auf die Untermuffe 2 der Halteteil 7 die in der Zeichnung dargestellte Lage einnimmt, wobei nach Möglichkeit die der Stirnfläche 8 der Glocke 1 zugekehrte Fläche 9 des Halteteils mindestens parallel zu dieser verlaufend, bevorzugt jedoch unter einem Winkel leicht nach oben verlaufend, ausgerichtet ist, damit beim Einfüllen des Betons Luftblasen aus diesem Bereich entweichen können und somit Lunkerstellen vermieden werden, die eine feste Verankerung des Halteteils 7 im Beton beeinträchtigen könnten.

Nach dem Ziehen der Untermuffe bildet der Dichtungsteil 6 des Dichtungsringes 3 die freie Innenkante der Glockenöffnung. Unter dem Einfluß der Vorspannung hebt der Dichtungsteil 6 vom Glockenkörper ab. Je nach dem Grad der Vorspannung kann der Dichtungsteil 6 in die gestrichelt dargestellte Betriebsstellung entweder von Hand umgelegt werden oder der Dichtungsteil 6 wird beim Einschieben des Spitzendes des nächsten Rohres von diesem erfaßt, zunächst in die gestrichelt dargestellte Betriebsstellung gebracht und dann beim weiteren Einschieben des Spitzendes in dieser Lage verpreßt, so daß vom Dichtungsring die geforderte Dichtungskraft erzeugt wird. Vor dem Umlegen kann die Fläche, auf der der Dichtungsteil 6 in Betriebsstellung zur Anlage kommt, einer Sichtprüfung unterzogen werden.

Wie aus der Zeichnung ersichtlich, ist aufgrund der angenäherten Dreiecksform des Querschnitts des Dichtungsteiles 6 in Betriebsstellung durch die nunmehr außenliegende Fläche 10 des Dichtungsteiles 6 eine sich in Einschubrichtung (Pfeil 11) konisch verjüngende Ringfläche gegeben, die eine gute Zentrierung beim Einschieben des Spitzendes bietet. Die Fläche 10 und das Spitzende werden in üblicher Weise vor dem Ineinanderschieben mit Gleitmittel bestrichen.

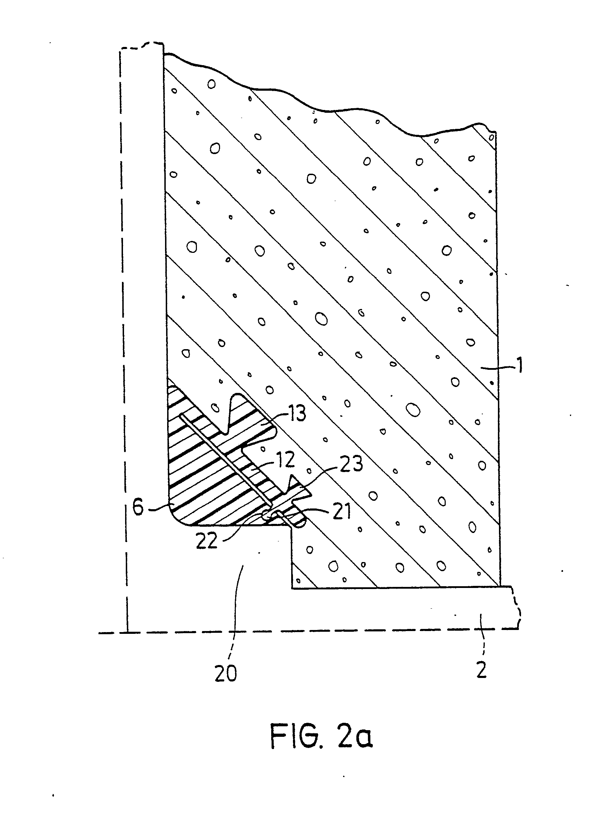

Die in Fig. 2 dargestellte bevorzugte Ausführungsform des Dichtungsringes weist wiederum einen Dichtungsteil 6 mit in etwa dreieckförmigen Querschnitt auf. Der Dichtungsteil 6 ist bei dieser Ausführungsform jedoch mit einem bandförmigen Befestigungsteil 12 verbunden, das zusammen mit seinem Halteteil 13 einen in etwa T-förmigen Querschnitt besitzt. Befestigungsteil 12 und Dichtungsteil 6 liegen im dargestellten Einbauzustand flächig gegeneinander, wobei das wiederum trapezförmige Halteteil 13 so ausgerichtet ist, daß es in bezug auf die Vorderfläche 8 der Glocke 1 mit seiner Fläche 9 gegen die Einfüllrichtung (Pfeil 4) des Betons unter einem spitzen Winkel ausgerichtet ist, so daß die Bildung von Lunkerstellen in diesem Bereich durch den Einschluß von Luftblasen praktisch vermieden ist. Die dargestellte Querschnittsform ist besonders gut geeignet für die Herstellung des Dichtungsringes aus einem Strangprofil. Beim Aufziehen auf die gestrichelt angedeutete Untermuffe 2 wird bei entsprechender Dickenbemessung des Dichtungsteiles 6 im Übergangsbereich zum Befestigungsteil 12 durch die unterschiedlichen Dehnungsverhältnisse eine einwandfreie Ausrichtung des Halteteils 13 in der gewünschten Lage erzielt. Ein weiterer Vorteil dieser Ausführungsform besteht darin, daß das Befestigungsteil 12 und das Dichtungsteil 6 mit ihren sich berührenden Flächen durch eine lösbare Verbindung aneinander festgelegt werden können, so daß sich ein leicht zu handhabendes Profil ergibt. Die lösbare Verbindung kann durch einen Heißschmelzkleber bewirkt werden, der bei der Herstellung des Profilstranges beispielsweise auf die entsprechende Fläche des Befestigungsteiles 12 aufgebracht und dann durch Umklappen mit dem Dichtungsteil 6 verbunden wird. Anstelle eines Heißschmelzklebers kann auch ein doppelseitig klebendes Klebeband aufgebracht werden. Nach dem Ziehen der Untermuffe 2 wird der Dichtungsteil 6 in gleicher Weise wie beim Ausführungsbeispiel gemäß Fig. 1 beschrieben, durch Umlegen in Richtung auf den Glockenspiegel in die Betriebsstellung gebracht.

Wie die Ausführungsform gemäß Fig. 2a erkennen läßt, kann anstelle einer Verklebung des Dichtungsteiles 6 mit dem Befestigungsteil 12 eine lösbare formschlüssige Verbindung vorgesehen werden. Diese kann, wie dargestellt, aus einem Steg 21 mit verdicktem Kopf am Außenrand des Befestigungsteiles 12 und einer entsprechend geformten Nut 22 im Dichtungsteil 6 bestehen. Für den Einbauzustand wird der Steg 21 in die Nut 22 « eingeknöpft ». Hierdurch wird, wie bei der Verklebung, die ebenfalls zweckmäßigerweise im Randbereich angeordnet ist, der Spalt zwischen den beiden im Einbauzustand aneinanderliegenden Flächen des Dichtungsteiles 6 und das Befestigungsteil 12 abgeschlossen, so daß beim Betoniervorgang keine Zementmilch einlaufen kann. Die später eine Dichtfläche bildende Fläche 10 am Dichtungsteil 6 bleibt damit sauber.

Zweckmäßig ist das Befestigungsteil 12 im Bereich der Steg/Nut-Verbindung 21, 22 mit einem zusätzlichen, kleiner dimensionierten Halteteil 23 versehen, durch das sichergestellt ist, daß beim Lösen der Steg/Nut-Verbindung das Befestigungsteil 12 in der vorgegebenen Lage bleibt.

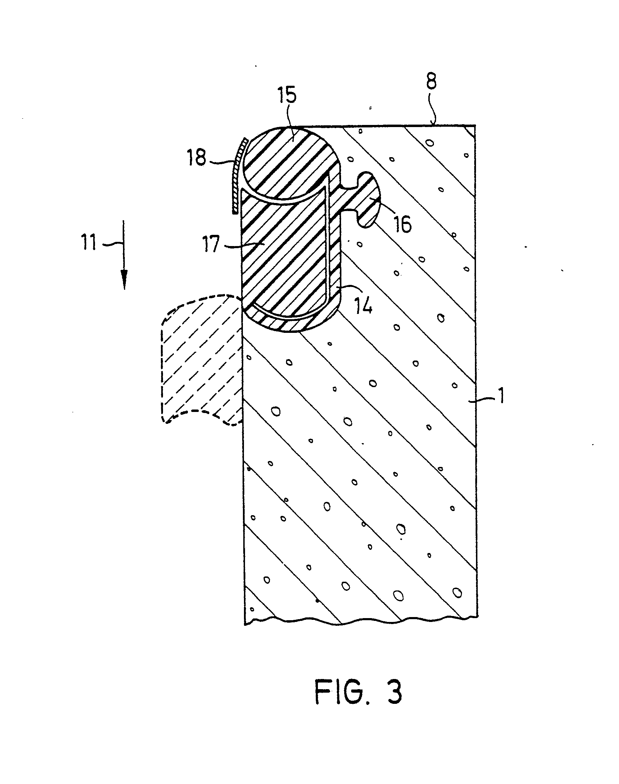

Bei dem in Fig. 3 dargestellten Ausführungsbeispiel ist das bandförmige Befestigungsteil 14 mit einer die Vorderkante der Glockenöffnung bildenden Verdickung 15 versehen, in deren Bereich auch das Halteteil 16 angeordnet ist, das hier beispielsweise hammerkopfartig ausgebildet ist. In das bandförmige Befestigungsteil 14 ist das Dichtungsteil 17 im Einbauzustand « eingerollt », wobei Dichtungsteil 17 und Verdickung 15 entweder durch entsprechende Formgebung, wie dargestellt, oder durch Verklebung, beispielsweise mittels des angedeuteten Klebebandes 18 zunächst miteinander verbunden sind. Nach dem Ziehen der Untermuffe und nach dem Entfernen eines etwa vorhandenen Klebebandes 18 wird der Dichtungsteil 17 in den Montagezustand geklappt und somit in den Montagezustand gebracht.

Alle Ausführungsformen können sowohl als Formartikel als auch aus Strangprofilen hergestellt werden. Das verwendete elastomere Material kann sowohl von dichter wie auch von zelliger Struktur sein. Bei der Herstellung aus Strangprofilen ist es darüber hinaus möglich, durch Koextrusionsverfahren das Halteteil aus einem Material mit dichter Struktur und hoher Härte herzustellen, während das Dichtungsteil aus einem Material mit zelliger Struktur mit der für die gewünschte Dichtkräfte erforderlichen Härte bzw. Rückstellspannung hergestellt sein kann. Das den Halteteil und den Dichtungsteil verbindende Befestigungsteil ist dann ebenfalls aus einem Material mit dichter Struktur hergestellt und im Dichtungsteil verankert.

Die Außenkontur des Dichtungsteiles 6 der Ausführungsformen gemäß Fig. 1, 2, 2a im dargestellten Einbauzustand entspricht der zugeordneten Kontur der verwendeten Untermuffe im Übergangsbereich zwischen den die Stirnfläche 8 und die Innenwandung 19 der die Glocke bzw. die Muffe formenden Flächen. Ausführungsformen, bei denen durch einen entsprechenden Ansatz 20 an der Untermuffe 2, wie in Fig. 2a angedeutet, eine zusätzliche Stoßkante an der Glocke bzw. Muffe gebildet wird, liegen noch im Rahmen der Erfindung, da es in erster Linie darauf ankommt, daß bei der Herstellung Hinterschneidungen im Bereich der Innenwand der Glocke vermieden werden.

Die Erfindung wurde vorstehend am Ausführungsbeispiel eines Betonrohres beschrieben. Die gleiche Dichtungsform kann auch zur Abdichtung sogenannter Schachtringe verwendet werden, die zur Herstellung von Einstiegschächten an Entwässerungssystemen verwendet werden. Auch die Schachtringe sind an einer Seite mit einer glockenförmigen Ausnehmung versehen, in die ein Dichtungsring der vorgeschlagenen Form einbetoniert wird, und am anderen Ende nach Art eines Spitzendes ausgebildet, so daß zur Bildung eines Schachtes jeweils mehrere Schachtringe mit nach obenweisendem Spitzende übereinandergesetzt werden und jeweils der Dichtungsspalt zwischen Spitzende und glockenförmiger Ausnehmung durch die einbetonierte Dichtung vollständig abgedichtet ist.

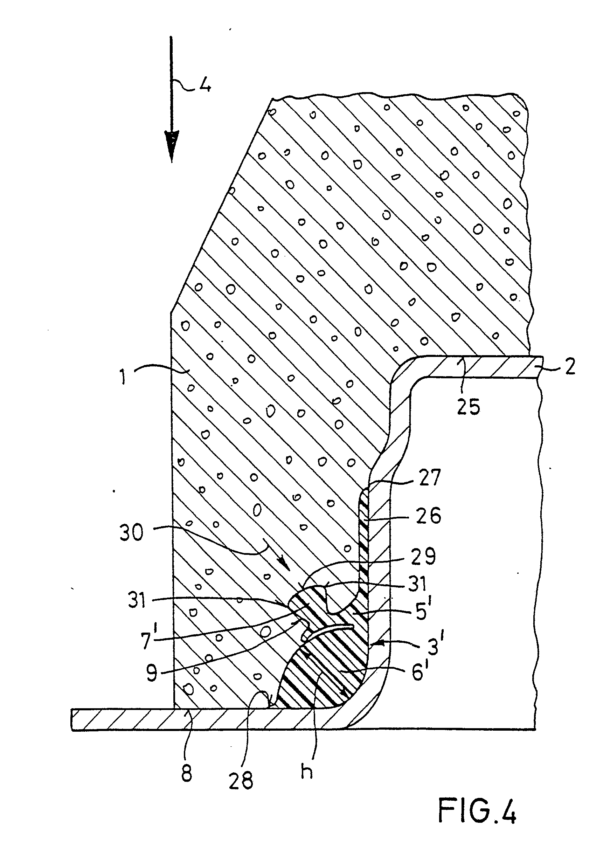

In dem in Fig. 4 dargestellten Längsschnitt durch eine Glocke 1 eines Betonrohres ist ebenfalls im Längsschnitt die zur Herstellung erforderliche Untermuffe 2 dargestellt. Bei der Herstellung wird der einzubetonierende Dichtungsring 3' unter Vorspannung auf die Untermuffe 2 bis an ihr unteres Ende aufgezogen. Durch die Vorspannung wird verhindert, daß beim Einfüllen des Betons, der in Richtung des Pfeiles 4, d. h. also von oben nach unten in die Form einläuft, der Dichtungsring aufschwimmt.

Der Dichtungsring besteht aus einem bandförmigen Befestigungsteil 5', der in einen im Querschnitt sich verdickenden Dichtungsteil 6' übergeht. Mit dem Befestigungsteil 5' ist ein Halteteil 7' verbunden, der bei dem dargestellten Ausführungsbeispiel einen trapezförmigen Querschnitt aufweist. Der Dichtungsteil 6' ist wulstartig geformt, wobei die Querschnittshöhe h in bezug auf die gewünschte Verpressung bemessen ist. Der Halteteil 7' ist in etwa rechtwinklig zum bandförmigen Befestigungsteil 5' ausgerichtet und nach dem Einfüllen des Betons von diesem vollständig umschlossen. Bei der Herstellung des Profils für den Dichtungsring 3' muß dafür Sorge getragen werden, daß nach dem Aufziehen des Dichtungsringes unter Vorspannung auf die Untermuffe 2 der Halteteil 7'

die in der Zeichnung dargestellte Lage einnimmt, wobei nach Möglichkeit die der Stirnfläche 8 der Glocke 1 zugekehrte Fläche 9 des Halteteils 7' unter einem Winkel leicht nach oben verlaufend ausgerichtet ist, damit beim Einfüllen des Betons Luftblasen aus diesem Bereich entweichen können und somit Lunkerstellen vermieden werden, die eine feste Verankerung des Halteteils 7' im Beton beeinträchtigen könnten.

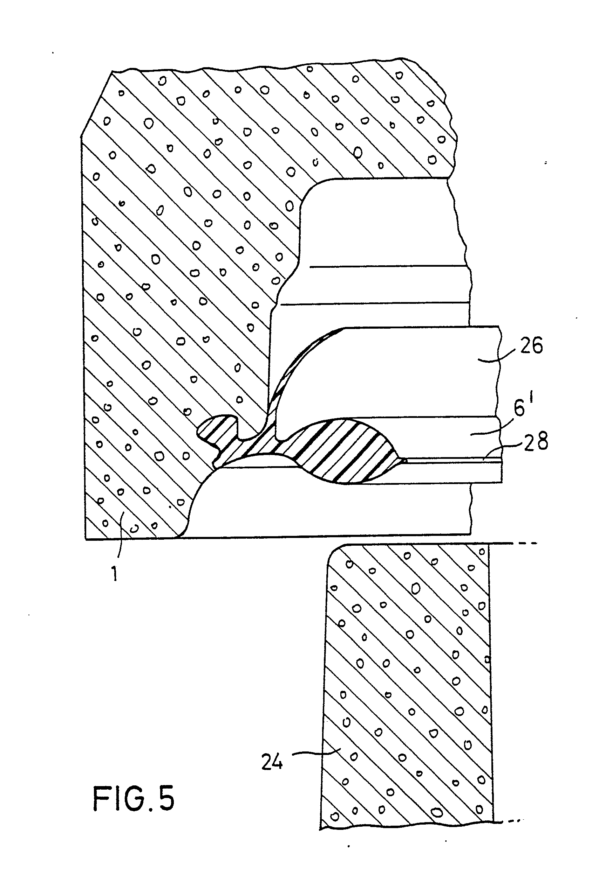

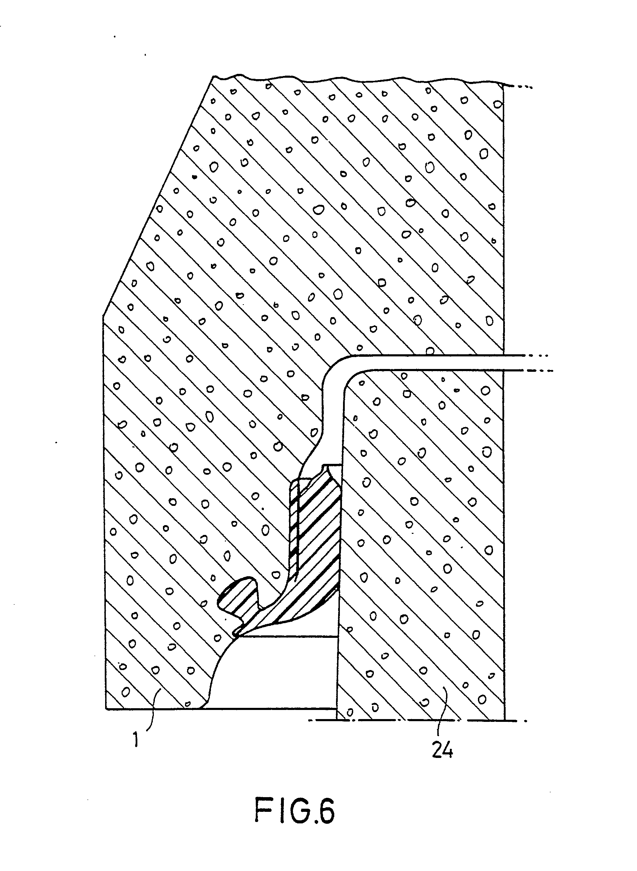

Der Dichtungsteil 6' des Dichtungsringes 3' bildet die freie Innenkante der Glockenöffnung (Fig. 4). Unter dem Einfluß der Vorspannung hebt nach dem Ziehen der Untermuffe der Dichtungsteil 6' vom Glockenkörper ab (Fig. 5). Der Grad der Vorspannung bestimmt, wie weit der Dichtungsteil 6' abhebt. Bei dem dargestellten Ausführungsbeispiel ist die Vorspannung so bemessen, daß der Dichtungsteil 6' in den freien Querschnitt der Glockenöffnung hineinragt und damit seine Betriebsstellung einnimmt. Beim Einschieben des Spitzendes 24 des Nachbarrohres wird der Dichtungsteil 6' von diesem erfaßt, zunächst an die Innenfläche angelegt und beim weiteren Einschieben des Spitzendes unter Verpressung des Dichtungsteiles 6' in den in Fig. 6 dargestellten Verlegungszustand gebracht.

Wie aus Fig. 4 ersichtlich, ist das Befestigungsteil 5' mit einer sich in Richtung auf den Glockenspiegel 25 erstreckenden Deckschürze 26 versehen. Die Länge der Deckschürze 26 ist so bemessen, daß sie den Bereich der Innenwandung der Glocke 1 überdeckt, an dem der Dichtungsteil 6' im Verlegungszustand, wie aus Fig. 6 ersichtlich, zur Anlage kommt. Die Deckschürze 26 ist an ihrem freien Rand 27 lippenartig auslaufend ausgebildet, so daß der auf die Untermuffe 2 unter Vorspannung aufgezogene Dichtungsring dichtend an der Untermuffe 2 anliegt. Sobald die Untermuffe 2 gezogen worden ist, hebt die Deckschürze 26 unter dem Einfluß der Vorspannung von der Innenwandung der Glocke 1 ab und nimmt die in Fig. 5 dargestellte Lage ein. Hierdurch wird die von der Deckschürze 26 überdeckbare Betonfläche frei und kann auf ihre einwandfreie Beschaffenheit hin überprüft werden. Im Verlegungszustand wird die Deckschürze 26, wie Fig. 6 ersichtlich, wieder in die beim Betonieren entstandene flache Ausnehmung in der Innenwandung der Glocke eingedrückt.

Bei dem dargestellten Ausführungsbeispiel weist der Dichtungsteil 6' einen in etwa elliptischen Querschnitt auf, der an seinem freien Rand eine Lippe 28 aufweist. Diese Lippe 28 hat lediglich für den Herstellungsvorgang Bedeutung, wie aus Fig. 4 ersichtlich ist, und dient zur Abdichtung des Anlagebereichs des Dichtungsringes 3' auf der Untermuffe 2. Da aufgrund der Anordnung der Lippe 28 auch nicht stellenweise Beton zwischen Untermuffe und Dichtungsteil einlaufen kann, wird auch hier nach dem Ziehen der Untermuffe das Abheben des Dichtungsteils 6' von der Betonfläche gefördert.

Der am Befestigungsteil 5' angeordnete, im Querschnitt vorzugsweise trapezförmig ausgebildete Halteteil 7' weist eine nach außen ausgewölbte Fußfläche 29 auf. Durch die Auswölbung der Fußfläche 29 wird die Verformbarkeit des Halteteils 7' etwas verringert, d. h. bei einer Zugkraft in Richtung des Pfeiles 30, durch die der Halteteil 7' aus seiner Verankerung im Beton herausgezogen werden könnte, werden die Begrenzungskanten 31 des Halteteils 7' gehindert, gegen die Kraftrichtung « umzuklappen » so daß eine sichere Verankerung des Halteteils 7' im Beton gewährleistet ist.

**Patentansprüche**

1. Steckmuffendichtung für Betonrohre, bestehend aus einem an der Glocke (1) befestigten Dichtungsring (3) aus elastomerem Material mit einem über ein Halteteil (7, 7', 13, 16), einbetonierten bandförmigen Befestigungsteil (5, 5', 12, 14), der mit einem — im Querschnitt — entsprechend der vorgesehen Verpressung zwischen der Innenwandung der Glocke und der Außenwandung des eingesteckten Rohrendes sich verdickenden Dichtungsteil (6, 6', 17) verbunden ist, wobei der Dichtungsteil (6, 6', 17) aus seiner Lage zum Zeitpunkt der Herstellung und gegebenenfalls beim nach folgenden Transport und der Lagerung des Rohres (Einbauzustand) durch Umlegung in Richtung auf den Glockenspiegel in Betriebsstellung gebracht wird, wobei ferner die in Betriebsstellung an der Innenwandung (19) der Glocke (1) anliegende Oberfläche des Dichtungsteils (6, 6', 17) im Einbauzustand in etwa mit der Innenwandung der Glocke (1) fluchtend angeordnet ist, dadurch gekennzeichnet, daß im Einbauzustand der Dichtungsteil (6, 6', 17) mit seiner in Betriebsstellung der Innenwandung (19) der Glocke (1) zugekehrten Fläche die freie Innenkante der Glockenöffnung bildet und hierbei mit seiner in der Betriebsstellung der Innenwandung (19) der Glocke (1) abgekehrten Fläche am Halteteil (7, 7', 13, 16) und/oder am Beton anliegt und daß der Befestigungsteil (5, 5', 12, 14) und der Halteteil (7, 7', 13, 16) einen in etwa T-förmigen Querschnitt bilden.

2. Steckmuffendichtung nach Anspruch 1, dadurch gekennzeichnet, daß im Einbauzustand der bandförmige Befestigungsteil (12, 14) und der Dichtungsteil (6, 17) flächig aneinanderliegen, wobei der Halteteil (13, 16) auf der dem Dichtungsteil (6, 17) abgekehrten Seite am Befestigungsteil angeordnet ist.

3. Steckmuffendichtung nach Anspruch 2, dadurch gekennzeichnet, daß der bandförmige Befestigungsteil (12) und der Dichtungsteil (6) auf ihren im Einbauzustand einander zugekehrten Flächen gleichflächig ausgebildet sind.

4. Steckmuffendichtung nach Anspruch 2 und 3, dadurch gekennzeichnet, daß — bezogen auf einen Längsschnitt durch die Glocke (1) — der bandförmige Befestigungsteil (12) unter. einem spitzen Winkel zur Glockenwandung (19) ausgerichtet ist und daß der Übergang zwischen Befestigungsteil (12) und Dichtungsteil (6) im Bereich des Schnittpunktes des Befestigungsteils (12) mit der Glockenwandung (19) liegt.

5. Steckmuffendichtung nach einem der Ansprüche 1 bis 4, dadurch gekennzeichnet, daß der Querschnitt des Dichtungsteils (6) — bezogen auf den Einbauzustand — auf seiner dem Befestigungsteil (12) abgekehrten Seite ausgewölbt, vorzugsweise in etwa dreieckig geformt ist.

6. Steckmuffendichtung nach einem der Ansprüche 3 bis 5, dadurch gekennzeichnet, daß im Einbauzustand Dichtungsteil (6) und Befestigungsteil (12) mit ihren aneinanderliegenden Flächen durch eine lösbare Verbindung verbunden sind.

7. Steckmuffendichtung nach Anspruch 6, dadurch gekennzeichnet, daß die lösbare Verbindung als Klebeverbindung durch einen Heißschmelzkleber gebildet ist.

8. Steckmuffendichtung nach Anspruch 6, dadurch gekennzeichnet, daß die lösbare Verbindung durch ein doppelseitig klebendes Klebeland gebildet ist.

9. Steckmuffendichtung nach Anspruch 6, dadurch gekennzeichnet, daß die lösbare Verbindung durch formschlüssigen Eingriff eines Steges (21) an einem Teil in eine entsprechend gestaltete Nut (22) am anderen Teil erfolgt (Fig. 2a).

10. Steckmuffendichtung nach einem der Ansprüche 1 bis 9, dadurch gekennzeichnet, daß der Halteteil (7, 13) des Befestigungsteils (5, 12) einen in etwa trapezförmigen Querschnitt aufweist und in etwa rechtwinklig zum Befestigungsteil (5, 12) ausgerichtet ist.

11. Steckmuffendichtung nach einem der Ansprüche 1 bis 10, dadurch gekennzeichnet, daß die der Vorderebene (8) der Glocke (1) zugekehrte Fläche (9) des Halteteils (7, 13) mit dieser wenigstens parallel verlaufend, vorzugsweise einen spitzen Winkel einschließend, ausgerichtet ist.

12. Steckmuffendichtung nach einem der Ansprüche 1 bis 11, dadurch gekennzeichnet, daß das bandförmige Befestigungsteil (14) eine die Vorderkante der Glockenöffnung bildende Verdickung (15) aufweist, deren Dicke im wesentlichen der Dicke des Dichtungsteils (17) entspricht und die diesen im Einbauzustand in seiner Lage hält.

13. Steckmuffendichtung nach einem der Ansprüche 1 bis 12, dadurch gekennzeichnet, daß der bandförmige Halteteil (5') mit einer sich in Richtung auf den Glockenspiegel (25) erstreckenden, an der Innenwandung der Glocke (1) anlegbaren Deckschürze (26) versehen ist.

14. Steckmuffendichtung nach Anspruch 13, dadurch gekennzeichnet, daß die Deckschürze (26) den Bereich der Innenwandung der Glocke (1) überdeckt, an dem der Dichtungsteil (6') in Betriebsstellung zur Anlage kommt.

15. Steckmuffendichtung nach Anspruch 13 oder 14, dadurch gekennzeichnet, daß der freie Rand (27) der Deckschürze (26) lippenartig ausläuft.

16. Steckmuffendichtung nach einem der Ansprüche 13 bis 15, dadurch gekennzeichnet, daß der Dichtungsteil (6') an seinem freien Rand eine Lippe (28) aufweist.

17. Steckmuffendichtung nach einem der Ansprüche 13 bis 16, dadurch gekennzeichnet, daß der am bandförmigen Befestigungsteil (5') angeordnete, im Querschnitt vorzugsweise trapezförmige Halteteil (7') eine nach außen ausgewölbte Fußfläche (29) aufweist.

## Claims

1. Socket end seal for concrete pipes, consisting of a sealing ring (3) of elastomer material attached to the socket (1), with a band-shaped fastening piece (5, 5', 12, 14) concreted in via a holding piece (7, 7', 13, 16), which fastening piece is connected with a sealing piece (6, 6', 17) which thickens in cross-section corresponding to the intended pressing between the inner wall of the socket and the outer wall of the inserted pipe end, in which the sealing piece (6, 6', 17) is brought out of its position at the time of manufacture and, if the occasion arises, in the subsequent transportation and storage of the pipe (assembly state), by shifting towards the socket plane in operating position, in which in addition the surface of the sealing piece (6, 6', 17) resting against the inner wall (19) of the socket (1) in operating position, is arranged in assembly state for instance in alignment with the inner wall of the socket (1), characterised in that in the assembly state the surface of the sealing piece (6, 6', 17 ; 9) which in the operating position faces the surface of the inner wall (19) of the socket (1) forms the free inner edge of the socket opening, and thereby rests with its surface which in the operating position faces away from the inner wall (19) of the socket (1) against the holding piece (7, 7', 13, 15) and/or the concrete, and that the fastening piece (5, 5', 12, 15) and the holding piece (7, 7', 13, 15) form for instance a T-shaped cross-section.

2. Socket end seal according to Claim 1, characterised in that in the assembly state the band-shaped fastening piece (12, 14) and the sealing piece (6, 17) rest flatly against each other, in which the holding piece (13, 16) is arranged on the side facing away from the sealing piece (6, 17) on the fastening piece.

3. Socket end seal according to Claim 2, characterised in that the band-shaped fastening piece (12) and the sealing piece (6) are constructed so as to be of equal area on their surfaces facing each other in the assembly state.

4. Socket end seal according to Claim 2 and 3, characterised in that — in relation to a longitudinal section through the socket (1) — the band-shaped fastening piece (12) is aligned at an acute angle to the socket wall (19) and that the transition between the fastening piece (12) and the sealing piece (6) lies in the region of the point of intersection of the fastening piece (12) with the socket wall (19).

5. Socket end seal according to one of Claims 1 to 4, characterised in that the cross-section of the sealing piece (6) — in relation to the assembly state — curves out on its side facing away from the fastening piece (12), and is preferably formed for instance in a triangular shape.

6. Socket end seal according to one of Claims 3 to 5, characterised in that in the assembly state, the sealing piece (6) and fastening piece (12) are connected by their surfaces lying adjacent to each other through a detachable connection.

7. Socket end seal according to Claim 6, characterised in that the detachable connection is formed as an adhesive connection through a hot-melt adhesive.

8. Socket end seal according to Claim 6, characterised in that the detachable connection is formed by a double-sided adhesive tape.

9. Socket end seal according to Claim 6, characterised in that the detachable connection takes place by form-locking engagement of a cross-piece (21) on one part into a correspondingly constructed groove (22) on the other part (Fig. 2a).

10. Socket end seal according to one of Claims 1 to 9, characterised in that the holding piece (7, 13) of the fastening piece (5, 12) has for instance a trapezoidal cross-section and is aligned for instance at right-angles to the fastening piece (5, 12).

11. Socket end seal according to one of Claims 1 to 10, characterised in that the surface (9) of the holding piece (7, 13) facing the anterior plane (8) of the socket (1) is aligned running at least parallel therewith, preferably forming an acute angle.

12. Socket end seal according to one of Claims 1 to 11, characterised in that the band-shaped fastening piece (14) has a thickening (15) forming the front edge of the socket opening, the thickness of which corresponds substantially to the thickness of the sealing piece (17) and which holds the latter in position in the assembly state.

13. Socket end seal according to one of Claims 1 to 12, characterised in that the band-shaped holding piece (5) is provided with a covering apron (26) which can be placed against the inner wall of the socket (1), and extends towards the socket plane (25).

14. Socket end seal according to Claim 13, characterised in that the covering apron (26) overlaps the region of the inner wall of the socket (1), against which the sealing piece (6') comes to rest in the operating position.

15. Socket end seal according to Claims 13 or 14, characterised in that the free rim (27) of the covering apron (26) runs out in the manner of a lip.

16. Socket end seal according to one of Claims 13 to 15, characterised in that the sealing piece (6') has a lip (28) on its free rim.

17. Socket end seal according to one of Claims 13 to 16, characterised in that the holding piece (7'), which is arranged on the band-shaped fastening piece (5') and is preferably trapezoidal in cross-section, has an outwardly arched base surface (29).

## Revendications

1. Joint d'étanchéité pour jonction à emboîtement de tuyaux en béton, constitué d'un anneau d'étanchéité (3) en matière élastomère, fixé sur l'emboîtement femelle (1) et présentant une partie de fixation (5, 5', 12, 14) en forme de bande, qui est encastrée dans le béton par l'intermédiaire d'une partie de retenue (7, 7', 13, 16) et qui est reliée à une partie d'étanchéité (6, 6', 17) s'épaississant — en section transversale — en conformité à la compression prévue entre la paroi interne de l'emboîtement femelle et la paroi externe du bout de tuyau emboîté, la partie d'étanchéité (6, 6', 17) étant amenée en position de service, à partir de sa position au moment de la fabrication et éventuellement lors d'un transport ultérieur et du stockage du tuyau (état de pose), par pliage en direction de l'épaulement de l'emboîtement femelle, tandis qu'en outre la surface de la partie d'étanchéité (6, 6', 17) qui s'appuie en position de service sur la paroi interne (19) de l'emboîtement femelle (1) est, à l'état de pose, disposée de manière à affleurer sensiblement la paroi interne de l'emboîtement femelle (1), caractérisé par le fait que, dans l'état de pose, la partie d'étanchéité (6, 6', 17), avec sa face tournée en position de service vers la paroi interne (19) de l'emboîtement femelle (1), constitue l'arête interne libre de l'ouverture d'emboîtement et s'applique alors, par sa face tournée dans la position de service à l'opposé de la paroi interne (19) de l'emboîtement (1), sur la partie de retenue (7, 7', 13, 16) et/ou sur le béton, et par le fait que la partie de fixation (5, 5', 12, 14) et la partie de retenue (7, 7', 13, 16) forment une section transversale sensiblement en forme de T.

2. Joint d'étanchéité pour jonction à emboîtement selon la revendication 1, caractérisé par le fait que, dans l'état de pose, la partie de fixation (12, 14) en forme de bande et la partie d'étanchéité (6, 17) s'appliquent à plat l'une sur l'autre, la partie de retenue (13, 16) étant disposée, sur la face tournée à l'opposé de la partie d'étanchéité (6, 17), sur la partie de fixation.

3. Joint d'étanchéité pour jonction à emboîtement selon la revendication 2, caractérisé par le fait que la partie de fixation en forme de bande (12) et la partie d'étanchéité (6) sont agencées coplanaires par leurs surfaces tournées l'une vers l'autre dans l'état de pose.

4. Joint d'étanchéité pour jonction à emboîtement selon les revendications 2 et 3, caractérisé par le fait que — par rapport à une coupe longitudinale à travers l'emboîtement femelle (1) — la partie de fixation en forme de bande (12) est orientée sous un angle aigu par rapport à la paroi d'emboîtement (19), et que la transition entre la partie de fixation (12) et la partie d'étanchéité (6) se trouve dans la zone du point d'intersection de la partie de fixation (12) avec la paroi d'emboîtement (19).

5. Joint d'étanchéité pour jonction à emboîtement selon l'une des revendications 1 à 4, caractérisé par le fait que la section transversale de la partie d'étanchéité (6) est — en se référant à l'état de pose — bombée, de préférence conformée sensiblement en triangle, sur son côté tourné à l'opposé de la partie de fixation (12).

6. Joint d'étanchéité pour jonction à emboîtement selon l'une des revendications 3 à 5, caractérisé par le fait que, dans l'état de pose, la partie d'étanchéité (6) et la partie de fixation (12) sont reliées, par leurs surfaces disposées l'une sur l'autre, à l'aide d'une liaison amovible.

7. Joint d'étanchéité pour jonction à emboîtement selon la revendication 6, caractérisé par le fait que la liaison amovible est réalisée en tant que liaison par collage à l'aide d'une colle thermofusible auto-adhésive.

8. Joint d'étanchéité pour jonction à emboîtement selon la revendication 6, caractérisé par le fait que la liaison amovible est réalisée par l'intermédiaire d'un ruban adhésif collant double-face.

9. Joint d'étanchéité pour jonction à emboîtement selon la revendication 6, caractérisé par le fait que la liaison amovible s'obtient à l'aide de l'engagement, par complémentarité de formes d'une nervure (21) située sur une partie, dans une gorge (22) conformée d'une façon correspondante et située sur l'autre partie (fig. 2a).

10. Joint d'étanchéité pour jonction à emboîtement selon l'une des revendications 1 à 9, caractérisé par le fait que la partie de retenue (7, 13) de la partie de fixation (5, 12) présente une section transversale sensiblement trapézoïdale et est orientée sensiblement perpendiculairement à la partie de fixation (5, 12).

11. Joint d'étanchéité pour jonction à emboîtement selon l'une des revendications 1 à 10, caractérisé par le fait que la surface (9) de la partie de retenue (7, 13) qui est dirigée vers le plan antérieur (8) de l'emboîtement femelle (1) est orientée de manière à s'étendre au moins parallèlement à celle-ci, de préférence en incluant un angle aigu.

12. Joint d'étanchéité pour jonction à emboîtement selon l'une des revendications 1 à 11, caractérisé par le fait que la partie de fixation en forme de bande (14) présente un épaississement (15) constituant l'arête antérieure de l'ouverture de l'emboîtement, dont l'épaisseur correspond essentiellement à l'épaisseur de la partie d'étanchéité (17) et qui maintient celle-ci dans sa position dans l'état de pose.

13. Joint d'étanchéité pour jonction à emboîtement selon l'une des revendications 1 à 12, caractérisé par le fait que la partie de retenue en forme de bande (5') est munie d'une jupe de recouvrement (26) s'étendant en direction de l'épaulement d'emboîtement (25) et applicable sur la paroi interne de l'emboîtement (1).

14. Joint d'étanchéité pour jonction à emboîtement selon la revendication 13, caractérisé par le fait que la jupe de recouvrement (26) recouvre la zone de la paroi interne de l'emboîtement (1) sur laquelle vient en appui, en position de service, la partie d'étanchéité (6').

15. Joint d'étanchéité pour jonction à emboîtement selon la revendication 13 ou 14, caractérisé par le fait que le bord libre (27) de la jupe de recouvrement (26) s'étend en forme de lèvre.

16. Joint d'étanchéité pour jonction à emboîtement selon l'une des revendications 13 à 15, caractérisé par le fait que la partie d'étanchéité (6') présente, sur son bord libre, une lèvre (28).

17. Joint d'étanchéité pour jonction à emboîtement selon l'une des revendications 13 à 16, caractérisé par le fait que la partie de retenue (7') associée à la partie de fixation en forme de bande (5') et, de préférence, trapézoïdale en section transversale, présente une surface de pied (29) bombée vers l'extérieur.

FIG. 1

FIG. 2

FIG. 2a

FIG. 3

FIG.4

FIG.5

26

6¹

28

1

24

FIG.6